# EUROPEAN PATENT SPECIFICATION

(11) **EP 3 530 336 B1**
(45) Date of publication and mention of the grant of the patent: **04.08.2021**
(21) Application number: 19159110.6
(22) Date of filing: 25.02.2019
(51) Int. Cl.: B01D 29/23, B01D 29/64

(54) **SELF-CLEANING FILTER**
SELBSTREINIGENDER FILTER
FILTRE AUTONETTOYANT

(30) Priority: 26.02.2018 IT 201800003030
(43) Date of publication of application: 28.08.2019
(73) Proprietor: Serenambiente S.r.l., 00195 Roma RM (IT)
(72) Inventor: Cendron, Nicola, 00195 Roma RM (IT)
(74) Representative: Perani & Partners S.p.A.

(56) References cited:
- EP-A1- 3 000 517
- CN-A- 105 833 590
- CN-B- 105 214 361
- DE-U1- 29 809 202
- DE-U1-202013 105 966

## Description

The present invention refers to a self-cleaning filter for liquids. Such filter can in particular be used anytime it is necessary to remove solid particulate and/or insoluble liquid from a liquid to be filtered, usually water. Such system is usually employed in purification, depuration plants, or for filtering waters for industrial, civil, marine and other uses.

Self-cleaning filters are known in the state of the art and are described for example in documents US 2009/050582, EP 2767321, US 2014/021125, CN 105214361, CN 105833590 and EP 3000517.

Self-cleaning filters of the state of the art comprise a liquid suction opening, a liquid delivery opening, a filtrating tubular element for filtering the liquid flowing from the liquid suction opening to the liquid delivery opening and a plurality of suction nozzles arranged radially in a rotatable way inside the filtrating tubular element, spaced between them longitudinally and provided with pads near the filtrating surface of the filtrating tubular element.

In document US 2014/021125, suction pads are T-shaped and have a suction slot that extends longitudinally. Such suction pads resulted to be non-satisfactory in terms of flow rate distribution/suction flow along the suction slot. This is, in fact, maximum in the central part at the discharge opening of the pad and minimum at the end parts.

### SUMMARY OF THE INVENTION

Disadvantageously, the known self-cleaning filters, by placing the suction slot at the inner surface to be cleaned, do not completely isolate the dirt-removing flow from the fluid to filter, allowing, on the one hand, the removed dirt to spread into the fluid to be cleaned, and on the other hand, the fluid to be filtered to be sucked.

In this context, the technical task underlying the present invention is proposing a self-cleaning filter which overcomes the aforementioned drawbacks of the prior art.

In particular, it is an object of the present invention to make available a self-cleaning filter able to improve counter-current cleaning performances.

The mentioned technical task and the specified objects are substantially obtained by a self-cleaning filter comprising the technical features set forth in one or more of the accompanying claims.

Such device overcomes the technical problem in that profiles in contact with the filter surface enclose dirt therebetween and allow removal thereof more efficiently by the suction inlet preventing it from depositing again on the inner surface of the filter.

### LIST OF FIGURES

Further characteristics and advantages of the present invention will appear more apparent from the indicative, and therefore non-limiting, description of a preferred embodiment, though not exclusive of a self-cleaning filter, as illustrated in the accompanying drawing wherein:

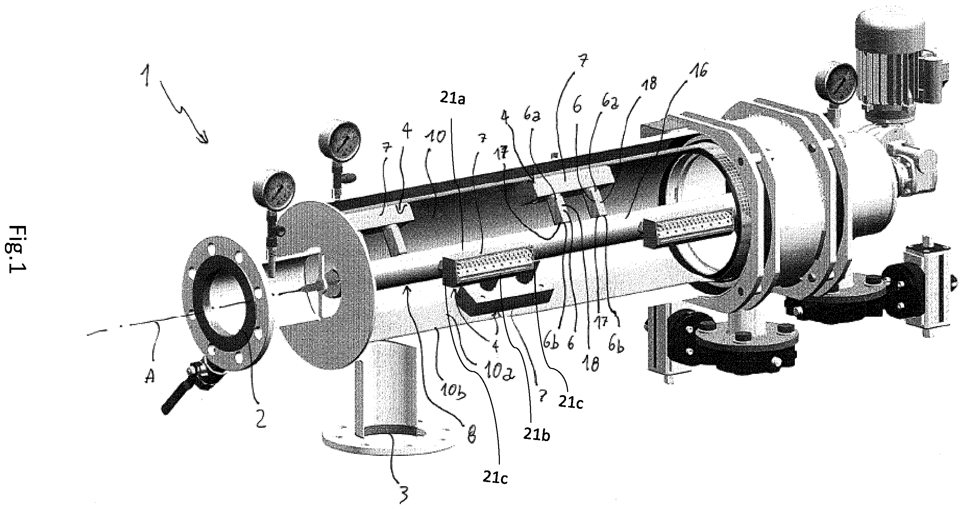

- Figure 1 shows a perspective view of the self-cleaning filter according to an embodiment of the present invention with some parts removed in order to better shows others;
- Figure 2 shows a view from the top of a detail of the filter of Figure 1;
- Figure 3 shows a perspective sectional view of a detail of the filter of Figure 1 according to a first embodiment;
- Figure 4 shows a perspective exploded view of a detail of the filter of Figure 1 according to a first embodiment;
- Figure 5 shows a sectional view of a detail of the filter according to the present invention in accordance with a second embodiment;
- Figure 6 shows a perspective view of a detail of the filter according to the present invention in accordance with a third embodiment;
- Figure 7 shows a perspective exploded view of a detail of the filter according to the present invention in accordance with a fourth embodiment;

### DETAILED DESCRIPTION

Referring to the enclosed figures, 1 indicates a self-cleaning filter according to an embodiment of the present invention.

The self-cleaning filter 1 comprises an entrance opening 2, a delivery opening 3 and a filtrating tubular element 10 configured for filtering the liquid flowing from the entrance opening 2 to the delivery opening 3.

The filtrating tubular element 10 extends along a longitudinal axis of development "A". Preferably, the filtrating tubular element 10 has a circular cross-section.

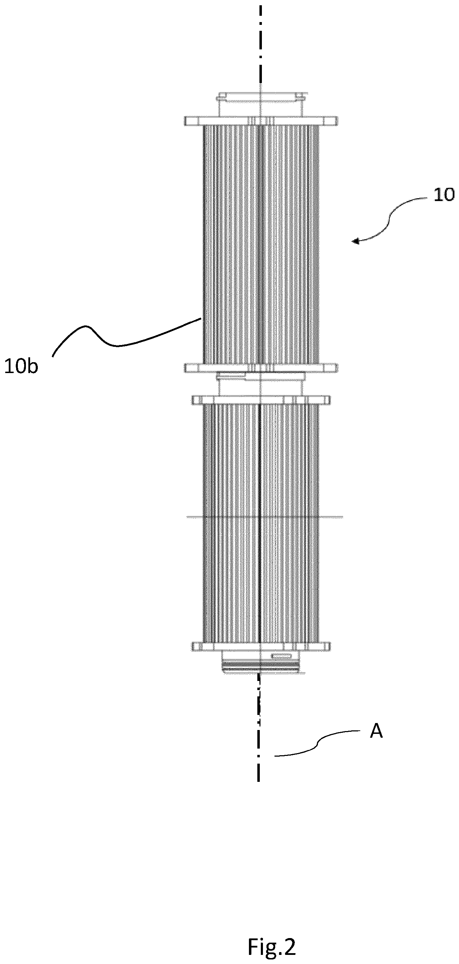

The filtrating tubular element 10 has a filtrating surface, in the example identified by the inner surface 10a, and an opposite external surface 10b. According to a preferred embodiment, the filtrating tubular element 10 is identified by a filtrating net. In an alternative embodiment, illustrated for example in figure 2, the filtrating tubular element 10 is identified by a pleated filtrating layer, e.g. it has a plurality of pleats arranged parallelly to the longitudinal axis development.

The self-cleaning filter 1 comprises one or more cleaning elements 4 arranged radially so as to rotate relative to the filtrating tubular element 10 and spaced between them along the longitudinal direction of development "A". Specifically, the cleaning elements 4 are arranged such as to rotate about a rotation axis extended along the longitudinal direction of development "A".

In the hereinafter description reference will be made without limitation to the embodiment shown in the figures wherein the cleaning elements 4 are arranged inside the filtrating tubular element 10.

Advantageously, in presence of two or more cleaning elements 4, the cleaning elements 4 are arranged angularly spaced between them. Specifically, two cleaning elements 4 arranged adjacent along the longitudinal direction of development "A" are angularly spaced of 120°.

In detail, the filter 1 comprises a shaft 8 arranged centrally and oriented along the longitudinal direction of development "A". Cleaning elements 4 are connected to the shaft 8 which, rotating, makes them rotate with respect to the filtrating tubular element 10.

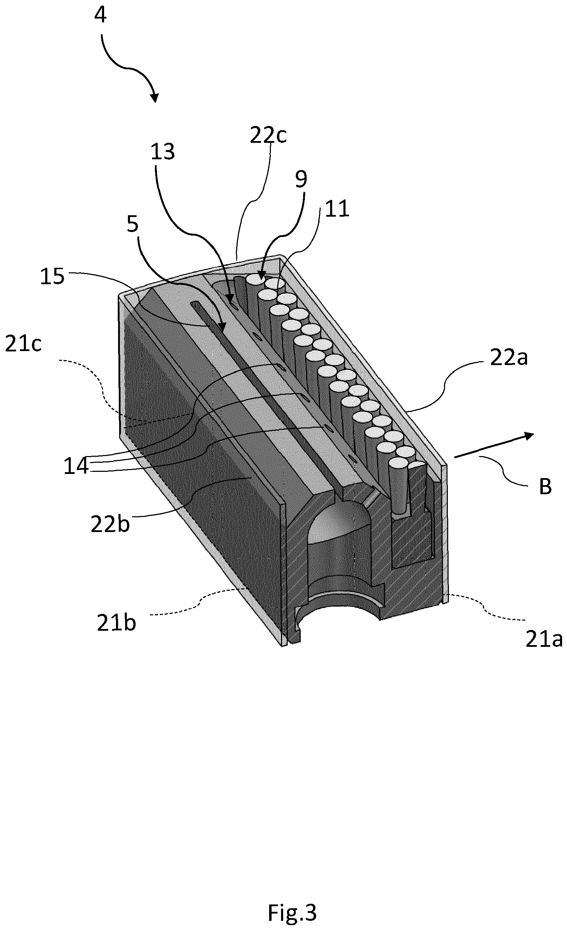

In other words, as a result of the rotation around the longitudinal direction of development "A" of the filtrating tubular element 10, each cleaning element travels across the inner surface 10a advancing along an advancement direction "B", as shown for example in figures 3, 5, 6 and 7.

More in detail, each cleaning element 4 comprises at least a first suction inlet 5 substantially developing along the longitudinal direction of development 10, in particular located near the inner surface 10a thereof. The first suction inlet 5 has the function of sucking impurities filtered by the inner surface 10a of the filtrating tubular element 10.

With further detail, the first suction inlet 5 comprises a slot 15 preferably of constant width, extending along the longitudinal direction of development "A" for more than 90% of the length of the cleaning element 4.

Furthermore, each cleaning element 4 comprises a front edge 21a and a back edge 21b with respect to the advancement direction "B", which at least two profiles are connected to, respectively a front profile 22a and a back profile 22b. Profiles 22a, 22b are put in contact with the inner surface 10a and are configured to keep such contact during the advancement of the cleaning element 4 in the cleaning operation. Specifically, such contact is elastically maintained.

Advantageously profiles 22a, 22b can be made of flexible polymeric material, which is particularly suitable to slide on the inner surface 10a minimizing friction and the potential mechanical removal of dirt. Such profiles enclose a cleaning area 23 comprised between the suction inlet 5 and the portion of inner surface 10a onto which the inlet 5 itself faces. Profiles 22a, 22b, being in contact with the inner surface 10a, enclose peripherally the suction inlet 5. Thereby the dirt removed is isolated within the cleaning area 23 such that it is sucked without being spread in the fluid to be treated.

Each cleaning element 4, in addition to the front edge 21a and the back edge 21b, has a pair of side edges 21c and comprises a pair of side edges 22c, each connected to a respective side edge 21c. In further detail, profiles 22a, 22b, 22c are connected between them such as to define a closed wall. Such closed wall, put in contact with the inner surface 10a, isolates completely the cleaning area 23 with respect to the fluid to be filtered, making sure that the sucked fluid takes part in the removal of the deposited residues.

In presence of a plurality of cleaning elements 4, cleaning elements 4 are preferably spaced along a longitudinal direction of development "A" such that, after their rotation around the longitudinal direction of development "A" of the filtrating tubular element 10, surfaces swept by the first suction inlets 5 of two adjacent cleaning elements 4 overlap with a ratio of overlapping area and overall area of the first suction inlet 5 comprised in a range between 5% and 35%.

Referring to the embodiments illustrated in figures 3, 4, 6 and 7 each cleaning element 4 comprises in particular a pair of rods 6 and a pad 7. Each rod 6 is radially oriented with respect to the filtrating tubular element 10. In particular, each rod 6 has one first end 6a and one second end 6b. The first end 6a is connected to the aforementioned shaft 8.

The pad 7 is connected to the second ends 6b of the rods 6, and it is in particular arranged transversally with respect to them. Such pad 6 is arranged in an area near to the inner surface 10a of the filtrating tubular element 10.

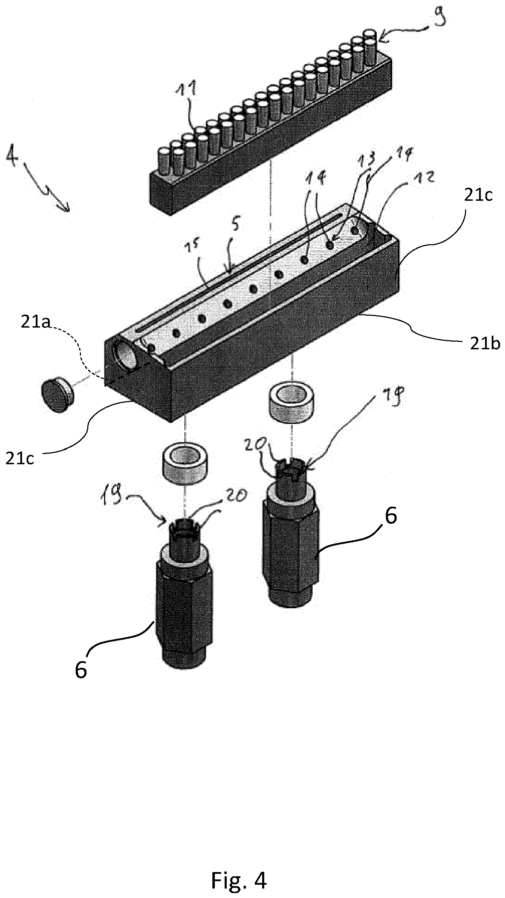

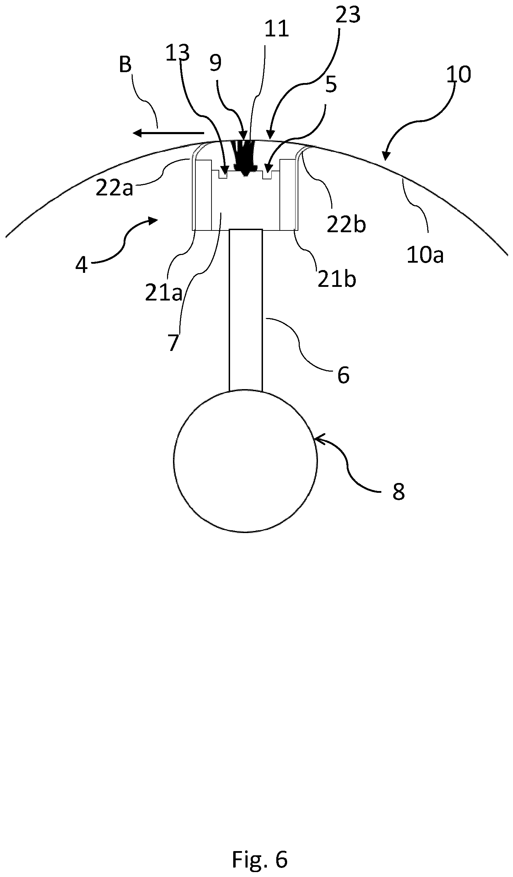

As shown for example in figures 4 and 6, each cleaning element 4 has rapid connecting means 19 active between the rod 6 and the pad 7. Such rapid connecting means 19 have the function to connect/disconnect the rod 6 from the pad 7 and, for example, can comprise one or more teeth 20 which snap-connect within the pad 7. Advantageously, rapid connecting means 19 ensure a firm fixing of the pad 7 on the rod 6, which is particularly useful when the cleaning element 4 is extracted by the filtrating tubular element 10 to carry out maintenance operations.

It must be noted that the pad 7 substantially extends parallelly with respect to the longitudinal direction of development "A". The first above described suction inlet 5 is obtained on the pad 7.

Each cleaning element 4 can advantageously comprise at least an elastic element, in particular an elastic bellow, connected to the pad 7 and configured for pushing it against the inner surface 10a.

Advantageously, the pad 7 can be made of plastic and/or metal and/or elastomeric material.

It must be noted that, in the embodiments wherein the pad 7 is present, the front 21a, back 21b and side edges 21c of the cleaning element 4 are defined on the pad 7. The profiles 22a, 22b are thus connected to the pad 7. Side profiles 22c are also connected to the pad 7.

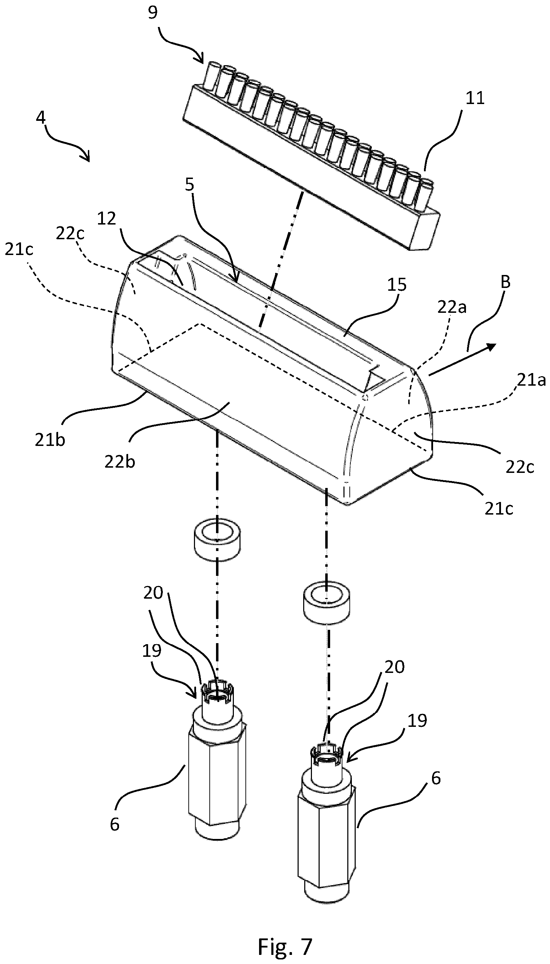

In the embodiment of figure 7, the profiles 22a, 22b and side profiles 22c are defined by the walls of the pad 7 thereof, in this case made of an elastomeric material.

Referring to the embodiments shown in figures 3, 4, 6 and 7, each cleaning element 4 comprises contact cleaning means 9, arranged in particular on the pad 7.

Such contact cleaning means 9 are configured for rubbing on the inner surface 10a of the filtrating tubular element 10, such as to remove dirt. Specifically, in the preferred embodiments, contact cleaning means 9 are placed in front of the first suction inlet 5 along the advancement direction "B". Alternatively contact cleaning means 9 can be placed behind the first suction inlet 5 along the direction of advancement "B".

More in detail, contact cleaning means 9 comprise a plurality of brushes 11. Each brush 11 is fixed to a respective cleaning element 4, and it is configured for sliding in contact with the inner surface 10a of the filtrating tubular element 10 along the mentioned direction of advancement "B". Advantageously, the brush 11 allows to remove by mechanical action a greater amount of dirt.

Referring to figures 3, 4 and 7, each cleaning element 4 can have a seat 12, in particular obtained on the pad 7. The mentioned brush 11 is arranged inside the seat 12. In further detail, each brush 11 can be inserted/removed in the seat 12, such as to be connected/disconnected to the respective cleaning element 4. More in detail, a pair of plugs (not shown) fix the brush 11 inside the seat 12. Such plugs are themselves a fixing mechanism known to the person skilled in the art and will not be thus further described.

Advantageously, removability of the brushes 11 allows to replace them when they are worn or, alternatively, to select a particular type of brush 11 which is more suitable for the specific type of filtrating tubular element 10 assembled on the filter 1.

Optionally, the cleaning element 4 can have a second suction inlet 13, distinct with respect to the first suction inlet 5. The second suction inlet 13 is arranged at the seat 12.

Specifically, in the embodiment of figures 3 and 4 the second suction inlet 13 is oriented such that it faces the brush 11.

In this case, the second suction inlet 13 is defined by a plurality of holes 14. Such holes are aligned along a transverse direction, and in particular, the direction of advancement "B" of the cleaning element 4. Specifically, the second suction inlet 13 is placed between the first suction inlet 5 and the brush 11. Advantageously, this arrangement of the second suction inlet 13, in particular in combination with the closed wall in contact with the inner surface 10a, allows to suck dirt immediately after the mechanical action of the brush 11 has separated it from the filtrating tubular element 10, preventing it from depositing again. In other words, the fluid dynamic action of the second suction inlet 13 occurs at the same time as the mechanical action of the brush 11.

In the embodiment illustrated in figure 6, the second suction inlet 13 faces the inner surface 10a. In this case the shape and size of the second suction inlet 13 are preferably equal to those of the first suction inlet 5. It must be noted that the above mentioned brush 11 is enclosed between the front 22a and back profiles 22b, in particular, placed between the first 5 and the second suction inlet 13. Advantageously, dirt removed by the mechanical action of the brush 11 is substantially enclosed inside the cleaning area 23 and sucked at the same time by the first 5 and second suction inlet 13.

The self-cleaning filter 1 further comprises a suction duct 16 arranged internally to the filtrating tubular element 10, in particular inside the above mentioned shaft 8.

Preferably, the suction duct 16 is arranged coaxially with respect to the filtrating tubular element 10. The suction duct 16 has a plurality of connecting openings 17, in particular obtained on an external surface of the shaft 8.

Referring to the embodiments of figures 3, 4, 6 and 7, each connecting opening 17 is connected to a respective cleaning element 4 by means of a respective connecting duct 18. The connecting duct 18 is thus defined within at least one of two rods 6 forming the cleaning element 4, preferably inside both rods 6.

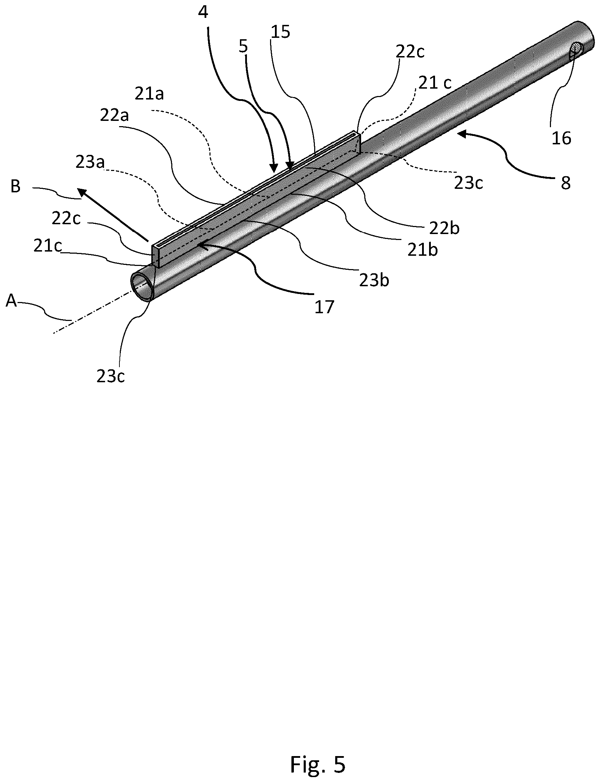

Alternatively, in the embodiment shown in figure 5, each cleaning element 4 is connected directly to a respective connecting opening 17, without using the two rods 6. Each connecting opening 17 has a front edge 23a, a back edge 23b and a pair of side edges 23c respectively defining the front edge 21a, the back edge 21b and the pair of side edges 21c of each cleaning element 4. In other words, as in this case the cleaning element 4 comprises neither the above mentioned pad nor the rods, the first suction inlet 5 is directly defined by the connecting opening 17, which therefore results to be part of the cleaning element 4.

In this case that profiles 22a, 22b, 22c protrude radially with respect to the suction duct 16. Profiles 22a, 22b, 22c further delimit peripherally the first suction inlet 5.

## Claims

1. A self-cleaning filter (1) comprising:
- a filtrating tubular element (10) having an inner surface (10a) and a longitudinal direction of development (A);
- a plurality of cleaning elements (4) inserted inside said filtrating tubular element (10) and configured for rotating about said longitudinal direction of development (A) each one moving along a respective direction of forward motion (B), said cleaning elements (4) being spaced away from each other along said longitudinal direction of development (A), each cleaning element (4) having a front edge (21a), a back edge (21b) and a pair of side edges (21c), each cleaning element (4) comprising at least a first suction inlet (5) facing said inner surface (10a) and placed in proximity to said inner surface (10a);
wherein each cleaning element (4) comprises a front profile (22a) connected to the front edge (21a) and a back profile (22b) connected to the back edge (21b), said profiles (22a, 22b) being brought into contact with said inner surface (10a) of said filtrating tubular body (10) and configured to keep in contact during the advancement along said inner surface (10b) to isolate a cleaning area (23) between said suction inlet (5) and said inner surface (10a), a pair of side profiles (22c) each one connected to a respective side edge (21c), said profiles (22a, 22b, 22c) being connected to each other so as to define a closed and flexible wall;
**characterized in that** the self-cleaning filter (1) comprises contact cleaning means (9) configured for striking said inner surface (10a) to remove dirt from said inner surface (10a), the contact cleaning means (9) comprises a plurality of brushes (11), each secured to a respective cleaning element (4) and configured for sliding in contact with the inner surface (10a) of the filtrating tubular element (10) along the direction of forward motion (B).

2. A self-cleaning filter (1) according to the previous claim, **characterized in that** each cleaning element (4) includes a seat (12), each brush (11) being insertable in/removable from a respective seat (12) so as to be connected to/disconnected from the respective cleaning element (4).

3. A self-cleaning filter (1) according to the previous claim, **characterized in that** each cleaning element (4) comprises a second suction inlet (13) placed in proximity to said seat (12).

4. A self-cleaning filter (1) according to the previous claim, **characterized in that** said second suction inlet (13) faces said inner surface (10a) and said brush (11) is arranged between said first suction inlet (5) and said second suction inlet (13).

5. A self-cleaning filter (1) according to claim 3, **characterized in that** said second suction inlet (13) faces said brush (11) and is arranged between the first suction inlet (5) and the brush (11).

## Patentansprüche

1. Selbstreinigender Filter (1), umfassend:
- ein filtrierenden rohrförmiges Filterelement (10), das eine Innenfläche (10a) und eine Längserstreckungsrichtung (A) aufweist;
- eine Vielzahl von Reinigungselementen (4), die in das filtrierende rohrförmige Element (10) eingesetzt und so konfiguriert sind, dass sie sich um die Längsrichtung der Längerstreckung (A) drehen, wobei sich jedes entlang einer jeweiligen Vorwärtsbewegungsrichtung (B) bewegt, wobei die Reinigungselemente (4) entlang der Längserstreckung (A) voneinander beabstandet sind, wobei jedes Reinigungselement (4) eine Vorderkante (21a), eine Hinterkante (21b) und ein Paar Seitenkanten (21c) aufweist, wobei jedes Reinigungselement (4) mindestens einen ersten Saugeinlass (5) umfasst, der der Innenfläche (10a) zugewandt und in der Nähe der Innenfläche (10a) angeordnet ist;
wobei jedes Reinigungselement (4) ein vorderes Profil (22a) hat, das mit der vorderen Kante (21a) verbunden ist, und ein hinteres Profil (22b), das mit der hinteren Kante (21b) verbunden ist, wobei die Profile (22a, 22b) in Kontakt mit der inneren Oberfläche (10a) des filtrierenden rohrförmigen Körpers 15 (10) gebracht werden und so konfiguriert sind, dass sie während der Vorwärtsbewegung entlang der inneren Oberfläche (10b) in Kontakt bleiben, um einen Reinigungsbereich (23) zwischen dem Saugeinlass (5) und der inneren Oberfläche (10a) zu isolieren, ein Paar von Seitenprofilen (22c), die jeweils mit einer entsprechenden Seitenkante (21c) verbunden sind, wobei die Profile (22a, 22b, 22c) so miteinander verbunden sind, dass sie eine geschlossene und flexible Wand bilden;
**dadurch gekennzeichnet, dass** der selbstreinigende Filter (1) Kontaktreinigungsmittel (9) umfasst, die so konfiguriert sind, dass sie auf die Innenfläche (10a) aufschlägen, um Schmutz von der Innenfläche (10a) zu entfernen, wobei die Kontaktreinigungsmittel (9) eine Vielzahl von Bürsten (11) umfassen, die jeweils an einem entsprechenden Reinigungselement (4) befestigt und so konfiguriert sind, dass sie in Kontakt mit der Innenfläche (10a) des filtrierenden rohrförmigen Elements (10) entlang der Richtung der Vorwärtsbewegung (B) gleiten.

2. Selbstreinigender Filter (1) nach dem vorhergehenden Anspruch, **dadurch gekennzeichnet, dass** jedes Reinigungselement (4) einen Sitz (12) aufweist, wobei jede Bürste (11) in einen jeweiligen Sitz (12) einführbar/entfernbar ist, um mit dem jeweiligen Reinigungselement (4) verbunden/von ihm entfernt zu werden.

3. Selbstreinigender Filter (1) nach dem vorhergehenden Anspruch, **dadurch gekennzeichnet, dass** jedes Reinigungselement (4) einen zweiten Saugeinlass (13) umfasst, der in der Nähe des Sitzes (12) angeordnet ist.

4. Selbstreinigender Filter (1) nach dem vorhergehenden Anspruch, **dadurch gekennzeichnet, dass** der zweite Saugeinlass (13) der Innenfläche (10a) zugewandt ist und die Bürste (11) zwischen dem ersten Saugeinlass (5) und dem zweiten Saugeinlass (13) angeordnet ist.

5. Selbstreinigender Filter (1) nach Anspruch 3, **dadurch gekennzeichnet, dass** der zweite Saugeinlass (13) der Bürste (11) zugewandt ist und zwischen dem ersten Saugeinlass (5) und der Bürste (11) angeordnet ist

## Revendications

1. Filtre auto-nettoyant (1) comprenant :
- un élément filtrant tubulaire (10) ayant une surface interne (10a) et une direction longitudinale de développement (A) ;
- une pluralité d'éléments de nettoyage (4) insérés à l'intérieur dudit élément filtrant tubulaire (10) et configurés pour tourner autour de ladite direction longitudinale de développement (A) chacun se déplaçant le long d'une direction de mouvement vers l'avant (B) respective, lesdits éléments de nettoyage (4) étant espacés entre eux le long de ladite direction longitudinale de développement (A), chaque élément de nettoyage (4) ayant un bord avant (21a), un bord arrière (21b) et une paire de bords latéraux (21c), chaque élément de nettoyage (4) comprenant au moins une première entrée d'aspiration (5) faisant face à ladite surface interne (10a) et positionnée à proximité de ladite surface interne (10a) ;
dans lequel chaque élément de nettoyage (4) comprend un profil avant (22a) relié au bord avant (21a) et un profil arrière (22b) relié au bord arrière (21b), lesdits profils (22a, 22b) étant mis en contact avec ladite surface interne (10a) dudit corps filtrant tubulaire (10) et configurés pour maintenir le contact lors de l'avancement le long de ladite surface interne (10b) pour isoler une zone de nettoyage (23) entre ladite entrée d'aspiration (5) et ladite surface interne (10a), une paire de profils latéraux (22c) chacun relié à un bord latéral (21c) respectif, lesdits profils (22a, 22b, 22c) étant reliés entre eux de sorte à définir une paroi close et flexible ;
**caractérisé en ce que** le filtre auto-nettoyant (1) comprend des moyens de nettoyage par contact (9) configurés pour frapper ladite surface internet (10a) pour éliminer la saleté de ladite surface interne (10a), le moyen de nettoyage par contact (9) comprend une pluralité de brosses (11), chacune fixée à un élément de nettoyage (4) respectif et configurées pour glisser au contact avec ladite surface interne (10a) de l'élément filtrant tubulaire (10) le long de la direction de mouvement vers l'avant (B).

2. Filtre auto-nettoyant (1) selon la revendication précédente, **caractérisé en ce que** chaque élément de nettoyage (4) comporte un siège (12), chaque brosse (11) pouvant être insérée dans/retirée d'un siège (12) respectif de sorte à être reliée à/séparée de l'élément de nettoyage (4) respectif.

3. Filtre auto-nettoyant (1) selon la revendication précédente, **caractérisé en ce que** chaque élément de nettoyage (4) comprend une deuxième entrée d'aspiration (13) positionnée à proximité dudit siège (12).

4. Filtre auto-nettoyant (1) selon la revendication précédente, **caractérisé en ce que** ladite deuxième entrée d'aspiration (13) fait face à ladite surface interne (10a) et ladite brosse (11) est disposée entre ladite première entrée d'aspiration (5) et ladite deuxième entrée d'aspiration (13).

5. Filtre auto-nettoyant (1) selon la revendication 3, **caractérisé en ce que** ladite deuxième entrée d'aspiration (13) fait face à ladite brosse (11) et est disposée entre ladite première entrée d'aspiration (5) et la brosse (11).
